# EUROPÄISCHE PATENTSCHRIFT

(11) **EP 1 298 033 B1**
(45) Veröffentlichungstag und Bekanntmachung des Hinweises auf die Patenterteilung: **18.01.2006**
(21) Anmeldenummer: 02016545.2
(22) Anmeldetag: 24.07.2002
(51) Int. Cl.: B62D 21/02, B62D 21/08, B62D 21/12, B60K 5/10

(54) **Tragrahmen für ein Fahrgestell eines Nutzfahrzeuges**
Supporting frame for the chassis of a commercial vehicle
Cadre support pour le châssis d'un véhicule utilitaire

(30) Priorität: 29.09.2001 DE 10148312
(43) Veröffentlichungstag der Anmeldung: 02.04.2003
(73) Patentinhaber: DaimlerChrysler AG, 70567 Stuttgart (DE)
(72) Erfinder: Martin, Gerd, 70327 Stuttgart (DE)

(56) Entgegenhaltungen:
- EP-A- 0 678 442
- DE-A- 4 006 418
- DE-A- 19 750 981
- GB-A- 466 214
- US-A- 3 528 678
- US-A- 5 131 714

## Beschreibung

Die Erfindung betrifft einen Tragrahmen für ein Fahrgestell eines Nutzfahrzeugs, insbesondere eines Lastkraftwagens, mit den Merkmalen des Oberbegriffs des Anspruchs 1.

Ein derartiger Tragrahmen ist beispielsweise aus der DE 197 50 981 A1 bekannt und weist zwei parallel zur Fahrzeuglängsrichtung verlaufende, in Fahrzeugquerrichtung voneinander beabstandete Längsträger auf, die über Querträger miteinander verbunden sind. Jeder Längsträger ist dabei aus einem Obergut, einem Untergurt und mehreren vertikalen Stegen zusammengebaut, wobei diese Stege jeweils Obergurt und Untergurt miteinander verbinden. Der auf diese Weise gebaute Tragrahmen kann durch Auswahl und Kombination von Gurten, Stegen und Querträgern, die sich hinsichtlich ihrer Steifigkeitswerte voneinander unterscheiden, an sehr unterschiedliche Anwendungsformen, die sich beispielsweise bezüglich der Steifigkeit, insbesondere Verwindungssteifigkeit, voneinander unterscheiden, mit einem relativ geringen Aufwand angepaßt werden.

Aus der DE 198 60 238 A1 ist ein weiterer Tragrahmen für ein Fahrgestell eines Nutzfahrzeugs bekannt, der zwei parallel zur Fahrzeuglängsrichtung verlaufende, in Fahrzeugquerrichtung voneinander beabstandete und über Querträger miteinander verbundene Längsträger aufweist. Eine Brennkraftmaschine des Nutzfahrzeugs ist auf der Oberseite des Tragrahmens auf die Längsträger aufgesetzt, wobei es sich bei der Brennkraftmaschinen um einen stehenden Reihenmotor handelt. Bei der Fahrzeugherstellung kann bei einer derartigen Bauweise das Fahrerhaus erst nach der Montage der Brennkraftmaschine auf den Tragrahmen aufgesetzt werden. Aufgrund dieser Anordnung kann ein Fahrerhausboden üblicherweise nicht eben ausgebildet werden, da die nach oben vorstehende Kontur der Brennkraftmaschine berücksichtigt werden muss. Eine auf diese Weise montierte Brennkraftmaschine ist für Wartungszwecke relativ schlecht zugänglich, so dass aufwendige Vorkehrungen getroffen werden müssen, um eine hinreichende Wartung gewährleisten zu können. Beispielsweise ist es bekannt, das Fahrerhaus so auszugestalten, dass es komplett nach vorn hochgekippt werden kann.

Die DE 197 33 470 C1 zeigt einen Längsträger für einen Tragrahmen eines Nutzfahrzeugs, der einen sich in Längsrichtung des Längsträgers erstreckenden Mittelsteg aufweist, der an seiner Oberseite und an seiner Unterseite jeweils von einem abgewinkelten Profilschenkel flankiert ist. Der Längsträger ist mit wenigstens einer Abkröpfung versehen. Der Mittelsteg und die beiden Profilschenkel sind als getrennt gefertigte und miteinander starr verbundene Bauteile gestaltet, wobei der plattenförmige Mittelsteg auf Höhe der Abkröpfung entsprechend gebogen ist.

Die vorliegende Erfindung beschäftigt sich mit dem Problem, für einen Tragrahmen der eingangs genannten Art eine Ausführungsform anzugeben, die den Zusammenbau des Nutzfahrzeugs erleichtert.

Dieses Problem wird erfindungsgemäß durch einen Tragrahmen mit den Merkmalen des Anspruchs 1 gelöst.

Die Erfindung beruht auf dem allgemeinen Gedanken, für die Montage der Brennkraftmaschine eine, insbesondere selbsttragende, Plattform vorzusehen, die vormontiert von unten in den Tragrahmen einsetzbar ist. Dabei wird diese Plattform mit Mittelstücken der Untergurte gebildet, so dass die Integration der Plattform in den Tragrahmen die Untergurte vervollständigt, während die Obergurte unabhängig von dieser Plattform vervollständigt sind. Durch diese Bauweise wird erreicht, dass einerseits die Brennkraftmaschine und gegebenenfalls weitere Komponenten, insbesondere des Antriebsstrangs, unabhängig vom übrigen Fahrzeugaufbau mit bzw. auf der Plattform vormontierbar sind. Andererseits geben die Obergurte dem Tragrahmen auch bei noch nicht eingesetzter Plattform bzw. bei demontierter Plattform eine hinreichende Festigkeit für den Tragrahmen, die insbesondere dazu ausreicht, andere Fahrzeugkomponenten, wie z.B. Achsen, Seitenanbauten und Aufbauten, am Tragrahmen zu montieren.

Hierdurch kann die vormontierte Plattform in den Tragrahmen eingebaut werden, der sich bereits in einem fortgeschrittenen Komplettierungszustand befindet. Des weiteren ist es grundsätzlich möglich, beim fertigen Fahrzeug, z.B. für einen Austausch der Brennkraftmaschine, die Plattform vom Tragrahmen zu demontieren, wobei der Aufwand hierzu vergleichsweise gering ist.

Entsprechend einer bevorzugten Ausführungsform kann die Brennkraftmaschine an der Oberseite der Plattform montiert sein, so dass die Brennkraftmaschine bei in den Tragrahmen eingesetzter und daran befestigter Plattform vertikal zwischen den Obergurten und den Untergurten angeordnet ist. Durch diese Maßnahme werden die Brennkraftmaschine sowie gegebenenfalls weitere Komponenten des Antriebsstrangs in das Innere des Tragrahmens integriert, wodurch zum einen ein für die Fahrdynamik vorteilhaft niedriger Schwerpunkt des Fahrzeugs erzielbar ist und wodurch sich andererseits die Montage von Fahrzeugaufbauten vereinfacht. Bei dieser Ausführungsform ist es außerdem möglich, die Brennkraftmaschine sowie gegebenenfalls andere Komponenten des Antriebsstrangs so im Tragrahmen zu plazieren, dass diese nicht nach oben über die Obergurte des Tragrahmens vorstehen. Diese Bauweise bietet eine zusätzliche Vereinfachung der Montage von Fahrzeugaufbauten, da wenig oder keine Störkonturen berücksichtigt werden müssen. Insbesondere ist es dadurch möglich, ein Führerhaus mit ebenem Boden auszubilden, wodurch sich dessen Herstellbarkeit vereinfacht und dessen Stabilität erhöht. Ein Kippen des Fahrerhauses für Wartungsarbeiten an der Brennkraftmaschine ist nicht mehr erforderlich, da diese Bauweise eine seitliche Wartung der Brennkraftmaschine ermöglicht. Die Brennkraftmaschine ist am Tragrahmen nicht mehr auf die Position unter dem Fahrerhaus eingeschränkt, so dass z.B. gleiche Antriebsstränge bei verschieden langen Fahrgestellen verwendbar sind.

Von besonderer Bedeutung ist eine Ausführungsform, bei der die Brennkraftmaschine über Motorlager an der Plattform befestigt ist, die an den Hilfsquerträgern ausgebildet sind. Auf diese Weise ist die Brennkraftmaschine indirekt an den Untergurt-Mittelstücken abgestützt, wodurch einerseits die wirksamen Kräfte großflächiger auf die Mittelstücke übertragen werden. Andererseits erfolgt die Abstützung der Brennkraftmaschine dadurch genau dort, wo die Plattform durch die Anbindung der Hilfsquerträger ihre höchste Festigkeit besitzt.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein bevorzugtes Ausführungsbeispiel der Erfindung ist in den Zeichnungen dargestellt und wird in der nachfolgenden Beschreibung näher erläutert, wobei sich gleiche Bezugszeichen auf gleiche oder funktional gleiche oder ähnliche Bauteile beziehen.

Es zeigen, jeweils schematisch,
- Fig. 1: eine stark vereinfachte Seitenansicht auf einen mittleren Ausschnitt eines Tragrahmens nach der Erfindung,

- Fig. 2: eine Seitenansicht auf einen Ausschnitt der Ansicht gemäß Fig. 1 und
- Fig. 3: eine Schnittansicht von oben auf den Ausschnitt gemäß Fig. 2 entsprechend den Schnittlinien III in Fig. 2.

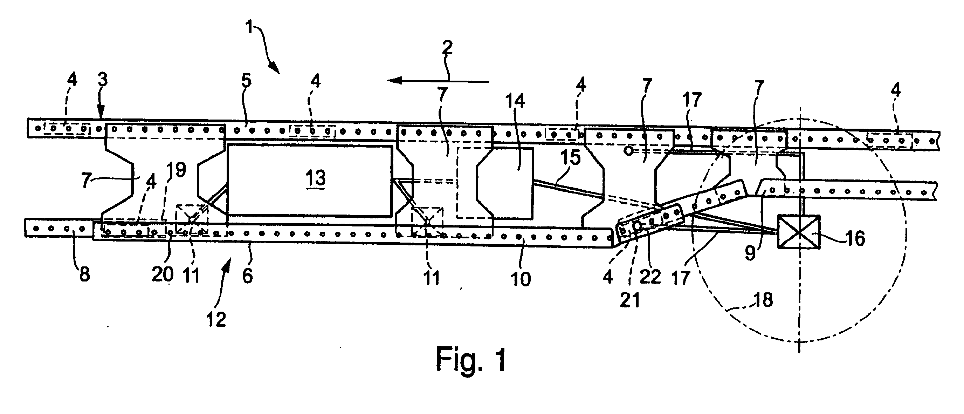

Entsprechend Fig. 1 weist ein Tragrahmen 1 nach der Erfindung eines im Übrigen nicht dargestellten Fahrgestells eines Nutzfahrzeugs, insbesondere eines Lastkraftwagens, zwei parallel zu einer durch einen Pfeil symbolisierten Fahrzeuglängsrichtung 2 verlaufende Längsträger 3 auf, von denen in Fig. 1 jedoch nur der dem Betrachter zugewandte Längsträger 3 erkennbar ist. Der andere Längsträger 3 befindet sich deckungsgleich hinter dem sichtbaren Längsträger 3. Die beiden Längsträger 3 sind in Fahrzeugquerrichtung voneinander beabstandet und zweckmäßig über mehrere Querträger 4 miteinander verbunden.

Die Längsträger 3 sind als sogenannte "gebaute Längsträger" ausgebildet und weisen einen Obergurt 5 und einen Untergurt 6 auf, die über mehrere vertikale Stege 7 miteinander verbunden sind. Zur vereinfachten Montage sind die Gurte 5 und 6 sowie die Stege 7 mit einem Lochmuster versehen, das eine einfache Verschraubung der Einzelteile zum Zusammenbau der Längsträger 3 ermöglicht. In dieses Lochmuster sind auch die Querträger 4 integriert, so dass auch der Zusammenbau des Tragrahmens 1 insgesamt relativ einfach durchführbar ist.

Erfindungsgemäß sind die Untergurte 6 bei jedem Längsträger 3 zumindest dreiteilig ausgebildet, so dass jeder Untergurt 6 bezüglich der Fahrtrichtung ein vorne liegendes Frontstück 8, ein hinten liegendes Heckstück 9 sowie ein zwischen Frontstück 8 und Heckstück 9 liegendes Mittelstück 10 aufweist. Diese Untergurt-Stücke 8, 9, 10 sind so dimensioniert, dass sie sich an ihren Enden gegenseitig überlappen und über das Lochmuster aneinander befestigt werden können. Die Mittelstücke 10 beider Untergurte 6 sind über wenigstens zwei Hilfsquerträger 11 miteinander verbunden, wodurch eine selbsttragende Plattform 12 ausgebildet ist, die als solche vormontierbar ist und in den im übrigen ebenfalls vormontierten Tragrahmen 1 zu dessen Komplettierung einsetzbar und daran befestigbar ist.

Auf dieser Plattform 12 ist eine Brennkraftmaschine 13 des Nutzfahrzeugs montiert; ebenso ist in der hier gezeigten Ausführungsform ein Getriebe 14 auf der Plattform 12 angeordnet. Zusätzlich zum Getriebe 14 kann auch ein Retarder auf der Plattform 12 angeordnet sein; ebenso ist es möglich, anstelle des Getriebes 14 eine Getriebe-Retarder-Einheit zu montieren. Eine Antriebswelle 15 erstreckt sich vom Getriebe 14 zu einer angetriebenen Hintersachse 16, die am Tragrahmen 3 gelagert ist. Längslenker 17 einer Hinterachsaufhängung können sich beispielsweise an einem der Stege 7 abstützen. Ein Hinterrad 18 ist durch einen Kreis symbolisiert.

Durch geeignete Abstützmaßnahmen kann der Tragrahmen 3 ohne die Plattform 12 relativ weitgehend komplettiert werden. Insbesondere kann der Tragrahmen 3 auch ohne die Plattform 12 zu einem Fahrgestell und letztlich auch zu einem Nutzfahrzeug komplettiert werden. Unabhängig von diesem unvollständigen Tragrahmen 3 kann die Plattform 12 vormontiert und mit der Brennkraftmaschine 13 sowie hier mit dem Getriebe 14 ausgestattet werden. Hierbei werden die genannten Komponenten, also die Brennkraftmaschine 13 und das Getriebe 14, auf einer Oberseite der Plattform 12 montiert. Beim Einbau der vormontierten Plattform 12 werden dadurch die Brennkraftmaschine 13 und das Getriebe 14 innerhalb des Tragrahmens 3, insbesondere zwischen dem Obergurt 5 und dem Untergurt 6, angeordnet. Hierdurch ergibt sich eine extrem niedrige Bauweise für den Tragrahmen 1. Die Positionierung der Brennkraftmaschine 13 zwischen Obergurt 5 und Untergurt 6 ermöglicht es, einfache Wartungsarbeiten von der Seite her vorzunehmen. Die Integration der Brennkraftmaschine 13 in das Innere des Tragrahmens 1 vereinfacht außerdem eine schalldämmende Kapselung der Brennkraftmaschine 13. Darüber hinaus können dadurch Störkonturen, die nach oben über den Obergurt 5 vorstehen, vermieden werden, wodurch sich der Anbau von Fahrzeugaufbauten vereinfacht. Von besonderem Vorteil ist diese Ausführungsform auch dadurch, dass die Position der Brennkraftmaschine 13 bezüglich der Längsrichtung 2 am Tragrahmen 1 nunmehr unabhängig ist von der Position eines auf dem Tragrahmen 1 angebrachten Fahrerhauses. Insbesondere bei Sattelzugmaschinen kann dadurch der Schwerpunkt des Sattelschleppers vorteilhaft nach hinten verschoben werden.

Die Anbindung der Plattform 12 an den Tragrahmen 1 erfolgt zumindest durch eine Befestigung der Mittelstücke 10 an den Frontstücken 8 und an den Heckstücken 9. Des weiteren ist bei der hier gezeigten Ausführungsform an einem dem Mittelstück 10 zugewandten Ende 19 des Frontstücks 8 einer der vertikalen Stege 7 angeordnet, über den auch das Mittelstück 10 an einem entsprechenden Ende 20 mit dem zugehörigen Obergurt 5 verbunden ist. In entsprechender Weise ist auch an einem dem Mittelstück 10 zugewandten Ende 21 des Heckteils 9 ein vertikaler Steg 7 angebracht, über den ein entsprechendes Ende 22 des Mittelstücks 10 am Obergurt 5 befestigt ist. Darüber hinaus kann zwischen den Enden 20 und 22 des Mittelstücks 10 ein weiterer vertikaler Steg 7 vorgesehen sein, der das Mittelstück 10 mit dem Obergurt 5 verbindet. Eine weitere Versteifung kann dadurch erreicht werden, dass am Frontteil 8 im Bereich der einander überlappenden Enden 19 und 20 einer der Querträger 4 angeordnet ist. In entsprechender Weise ist auch einer der Querträger 4 an den sich überlappenden Enden 21 und 22 am Heckstück 9 angebracht.

Für die Befestigung der Plattform 12 am Tragrahmen 1 werden lösbare Befestigungsmittel, wie z.B. Schrauben, bevorzugt, um dadurch einen vereinfachten Ausbau der Plattform 12 aus dem Tragrahmen 1 zu ermöglichen. Durch diese Bauweise kann die Plattform 12 zusammen mit den daran montierten Komponenten (z.B. Brennkraftmaschine 13 und Getriebe 14) modulartig abgebaut, gewartet und gegebenenfalls ausgetauscht werden.

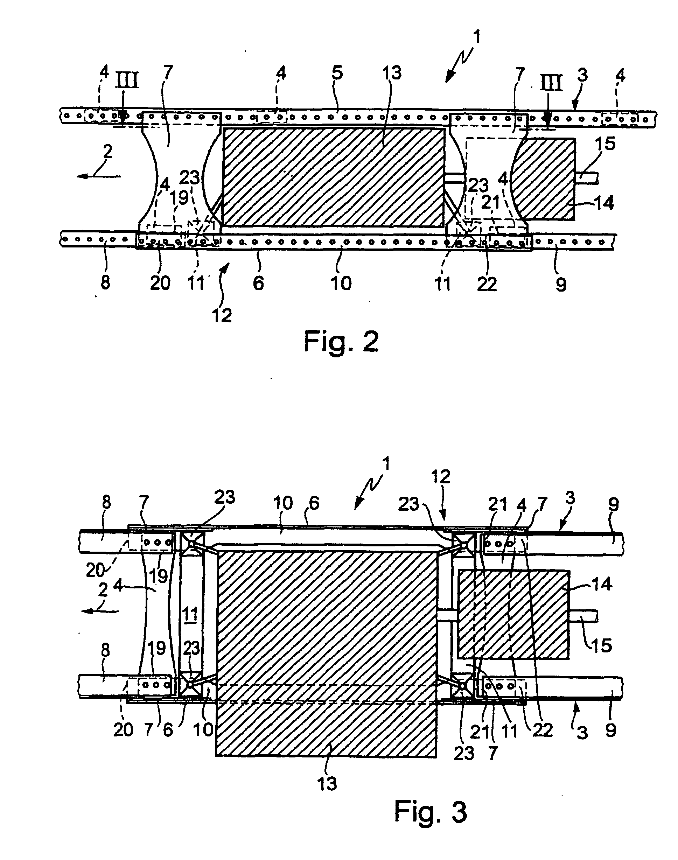

Entsprechend Fig. 2 kann die Plattform 12 auch kürzer als bei der Ausführungsform gemäß Fig. 1 ausgebildet sein. Zweckmäßig erfolgt die Befestigung der Brennkraftmaschine 13 über Motorlager 23, um eine Schwingungsdämpfung zu realisieren. Vorzugsweise sind diese Motorlager 23 an den Hilfsquerträgern 11 ausgebildet, so dass sich die Brennkraftmaschine 13 über die Hilfsquerträger 11 an den Mittelstücken 10 abstützt.

Entsprechend Fig. 3 sind diese Motorlager 23 bevorzugt an den Enden der Hilfsquerträger 11 angeordnet, an denen die Hilfsquerträger 11 auf den Mittelstücken 10 aufliegen. Bei dieser Bauweise erfolgt die Befestigung der Brennkraftmaschine 13 genau an den Stellen der Plattform 12, die über die höchste Festigkeit verfügen.

In Fig. 3 ist außerdem der spezielle Einbau einer Brennkraftmaschine 13 wiedergegeben, die als liegender Reihenmotor ausgebildet ist. Je nach Dimensionierung des Tragrahmens 1 und der Brennkraftmaschine 13 kann die in Fig. 3 gezeigte Situation auftreten, wonach die Brennkraftmaschine 13 wenigstens an einer Seite des Tragrahmens 1 seitlich über diesen vorsteht. Die Brennkraftmaschine 13 befindet sich dann üblicherweise noch immer innerhalb des Fahrgestells, das den zentralen Tragrahmen 1 regelmäßig relativ weit seitlich vergrößert. Anstelle eines liegenden Reihenmotors kann auch ein Boxermotor zur Anwendung kommen.

Die Brennkraftmaschine 13 kann auch an beiden Seiten des Tragrahmens 1 über dessen Längsträger 3 vorstehen.

Die gezeigte Bauweise des Tragrahmens 1 ermöglicht durch seine gebauten Längsträger 3 einen Aufbau mit abschnittsweiser relativ großer vertikaler Höhe (vgl. Fig. 1), wodurch sich lokal relativ hohe Widerstandsmomente und somit relativ geringe Biegebeanspruchungen darstellen lassen. Ebenso ergibt sich dadurch eine sehr hohe Steifigkeit für den Tragrahmen 1. Durch die Anbindung der Mittelstücke 10 an die zugehörigen Frontstücke 8 und Heckstücke 9 erfolgt im Untergurt 6 bei integrierter Plattform 12 keine Schubflussunterbrechung, wodurch der Tragrahmen 1 bei eingebauter Plattform 12 besonders hohe Steifigkeitswerte erreicht. Die Längsträger 3 besitzen aufgrund ihrer Bauweise ein relativ geringes Gewicht. Des weiteren bestehen die Einzelteile des Tragrahmens 1, insbesondere die Gurte 5 und 6, die Stege 7, die Querträger 4 sowie die Hilfsquerträger 11, aus einfachen Kantteilen bzw. aus ebenen Blechen. Dementsprechend ist der Tragrahmen 1 besonders preiswert herstellbar. Die vertikalen Stege 7 können zusätzlich Federbock-, Längslenkerbock- und Konsolenfunktionen aufweisen.

Da die Position der Brennkraftmaschine 13 bei diesem Aufbau unabhängig vom Fahrerhaus entlang des Tragrahmens 1 wählbar ist, kann auch der komplette Antriebsstrang hinsichtlich seiner Länge standardisiert werden, so dass der Abstand zwischen Brennkraftmaschine 13 und angetriebener Achse bei unterschiedlichen Fahrzeuglängen gleich bleiben kann.

Eine bezüglich der Fahrzeuglängsrichtung nach hinten versetzte Brennkraftmaschine 13 schafft vor der Brennkraftmaschine 13 Einbauraum, durch den der Einbau eines Luft/Kühlmittel-Wärmetauschers, sogenannter "Kühler", erheblich vereinfacht werden kann.

Durch die aufgezeigte Bauweise des Tragrahmens 1 vereinfacht sich auch die Anbindung seitlicher Anbauteile, wie z.B. Kraftstofftank, Kotflügel, Staubehälter.

## Patentansprüche

1. Tragrahmen für ein Fahrgestell (1) eines Nutzfahrzeugs, insbesondere eines Lastkraftwagens, mit zwei parallel zur Fahrzeuglängsrichtung (2) verlaufenden, in Fahrzeugquerrichtung voneinander beabstandeten und über Querträger (4) miteinander verbundenen Längsträgern (3), die jeweils aus einem Obergurt (5), einem Untergurt (6) und mehreren Obergurt (5) und Untergurt (6) miteinander verbindenden vertikalen Stegen (7) zusammengebaut sind,
**dadurch gekennzeichnet,**
**dass** beide Untergurte (6) bezüglich der Fahrzeuglängsrichtung (2) in ein vorne liegendes Frontstück (8), ein hinten liegendes Heckstück (9) und ein dazwischen liegendes Mittelstück (10) eingeteilt sind, wobei beide Untergurt-Mittelstücke (10) über Hilfsquerträger (11) miteinander verbunden sind und eine Plattform (12) bilden, auf der zumindest eine Brennkraftmaschine (13) montiert ist und die eine vormontierbare Einheit bildet, die in den Tragrahmen (1) einsetzbar und zumindest am Untergurt-Frontstück (8) sowie am Untergurt-Heckstück (9) befestigbar ist.

2. Tragrahmen nach Anspruch 1,
**dadurch gekennzeichnet,**
**dass** die Brennkraftmaschine (13) an der Oberseite der Plattform (12) montiert ist, so dass die Brennkraftmaschine (13) bei in den Tragrahmen (1) eingesetzter und daran befestigter Plattform (12) vertikal zwischen den Obergurten (5) und den Untergurten (6) angeordnet ist.

3. Tragrahmen nach Anspruch 2,
**dadurch gekennzeichnet,**
**dass** die Brennkraftmaschine (13) als Boxermotor oder als liegender Reihenmotor ausgebildet ist.

4. Tragrahmen nach einem der Ansprüche 1 bis 3,
**dadurch gekennzeichnet,**
**dass** bei in den Tragrahmen (1) eingebauter Plattform (12) die Untergurt-Mittelstücke (10) jeweils über wenigstens einen vertikalen Steg (7) mit dem zugehörigen Obergurt (5) verbunden sind.

5. Tragrahmen nach einem der Ansprüche 1 bis 4,
**dadurch gekennzeichnet,**
**dass** an einem dem Mittelstück (10) zugewandten Ende (19) des Frontstücks (8) ein vertikaler Steg (7) angeordnet ist, über den das Mittelstück (10) und das Frontstück (8) bei in den Tragrahmen (1) eingebauter Plattform (12) mit dem zugehörigen Obergurt (5) verbunden sind.

6. Tragrahmen nach einem der Ansprüche 1 bis 5,
**dadurch gekennzeichnet,**
**dass** an einem dem Mittelstück (10) zugewandten Ende des Heckstücks (9) ein vertikaler Steg (7) angeordnet ist, über den das Mittelstück (10) und das Heckstück (9) bei in den Tragrahmen (1) eingebauter Plattform (12) mit dem zugehörigen Obergurt (5) verbunden sind.

7. Tragrahmen nach einem der Ansprüche 1 bis 6,
**dadurch gekennzeichnet,**
**dass** am Mittelstück (10) zwischen seinen Enden (20, 22) ein vertikaler Steg (7) angeordnet ist, über den das Mittelstück (10) bei in den Tragrahmen (1) eingebauter Plattform (12) mit dem zugehörigen Obergurt (5) verbunden ist.

8. Tragrahmen nach einem der Ansprüche 1 bis 7,
**dadurch gekennzeichnet,**
**dass** an einem dem Mittelstück (10) zugewandten Ende (19) der Frontstücke (8) einer der Querträger (4) angeordnet ist, der die beiden Untergurt-Frontstücke (8) miteinander verbindet.

9. Tragrahmen nach einem der Ansprüche 1 bis 8,
**dadurch gekennzeichnet,**
**dass** an einem dem Mittelstück (10) zugewandten Ende (21) der Heckstücke (9) einer der Querträger (4) angeordnet ist, der die beiden Untergurt-Heckstücke (9) miteinander verbindet.

10. Tragrahmen nach einem der Ansprüche 1 bis 9,
**dadurch gekennzeichnet,**
**dass** die Brennkraftmaschine (13) über Motorlager (23) an der Plattform (12) befestigt ist, die an den Hilfsquerträgern (11) ausgebildet sind.

11. Tragrahmen nach einem der Ansprüche 1 bis 10,
**dadurch gekennzeichnet,**
**dass** die Plattform (12) mit lösbaren Befestigungsmitteln am Tragrahmen (1) befestigt ist.

12. Tragrahmen nach einem der Ansprüche 1 bis 11,
**dadurch gekennzeichnet,**
**dass** neben der Brennkraftmaschine (13) auch ein Getriebe (14) oder ein Getriebe mit Retarder oder eine Getriebe-Retarder-Einheit auf der Plattform (12) montiert ist.

## Claims

1. A supporting frame for a chassis (1) of a utility vehicle, in particular a lorry, having two side members (3) which run parallel to the length (2) of the vehicle, are positioned at a distance from one another across the width of the vehicle and are connected together by means of cross members (4), and each of which is constructed of an upper section (5), a lower section (6) and several vertical struts (7) which connect the upper section (5) and lower section (6) together,
**characterised in that**
both lower sections (6) are divided along the length (2) of the vehicle into a front part (8) positioned at the front, a rear part (9) positioned at the rear and a central part (10) positioned between the other two, the two lower section central parts (10) being connected together by auxiliary cross members (11) and forming a platform (12) on which at least one internal combustion engine (13) is fitted and which forms a pre-mountable unit which can be inserted into the frame (1) and fixed at least to the lower section front part (8) and the lower section rear part (9).

2. A frame in accordance with claim 1,
**characterised in that**
the internal combustion engine (13) is mounted on the top of the platform (12) in such a manner that when the platform (12) is inserted into and fixed to the frame (1) the internal combustion engine (13) is positioned vertically between the upper sections (5) and the lower sections (6).

3. A frame in accordance with claim 2,
**characterised in that**
the internal combustion engine (13) is designed as a flat engine or as a flat in-line engine.

4. A frame in accordance with one of claims 1 to 3,
**characterised in that**
when the platform (12) is fitted in the frame (1), the lower section central parts (10) are connected to the corresponding upper section (5) by at least one vertical strut (7).

5. A frame in accordance with one of claims 1 to 4,
**characterised in that**
positioned at one end (19) of the front part (8) facing the central part (10) is a vertical strut (7) by means of which the central part (10) and the front part (8) are connected to the corresponding upper section (5) when the platform (12) is fitted in the frame (1).

6. A frame in accordance with one of claims 1 to 5,
**characterised in that**
positioned at one end of the rear part (9) facing the central part (10) is a vertical strut (7) by means of which the central part (10) and the rear part (9) are connected to the corresponding upper section (5) when the platform (12) is fitted in the frame (1).

7. A frame in accordance with one of claims 1 to 6,
**characterised in that**
positioned between the ends (20, 22) of the central part (10) is a vertical strut (7) by means of which the central part (10) is connected to the corresponding upper section (5) when the platform (12) is fitted in the frame (1).

8. A frame in accordance with one of claims 1 to 7,
**characterised in that**
positioned at one end (19) of the front part (8) facing the central part (10) is one of the cross members (4) which connects the two upper section front parts (8) together.

9. A frame in accordance with one of claims I to 8,
**characterised in that**
positioned at one end (21) of the rear part (9) facing the central part (10) is one of the cross members (4) which connects the two lower section front parts (9) together.

10. A frame in accordance with one of claims 1 to 9,
**characterised in that**
the internal combustion engine (13) is fixed to the platform (12) by means of engine bearings (23) which form part of the auxiliary cross members (11).

11. A frame in accordance with one of claims 1 to 10,
**characterised in that**
the platform (12) is fixed to the frame (1) by detachable fixing means.

12. A frame in accordance with one of claims 1 to 11,
**characterised in that**
in addition to the internal combustion engine (13), a transmission (14) or a transmission with retarder or a transmission/retarder unit is also mounted on the platform (12).

## Revendications

1. Cadre support pour le châssis (1) d'un véhicule utilitaire, en particulier d'un camion, comprenant deux longerons (3) s'étendant parallèlement à la direction longitudinale (2) du véhicule, espacés l'un de l'autre dans la direction transversale du véhicule et reliés l'un à l'autre par des traverses (4), lesquels longerons sont constitués, respectivement, d'une membrure supérieure (5), d'une membrure inférieure (6) et de plusieurs isthmes verticaux (7) reliant entre elles la membrure supérieure (5) et la membrure inférieure (6),
**caractérisé**
- **en ce que** les deux membrures inférieures (6) sont divisées, par rapport à la direction longitudinale (2) du véhicule, en une partie avant (8) placée devant, une partie arrière (9) placée derrière et une partie centrale (10) se trouvant entre la partie avant et la partie arrière, où les deux parties centrales (10) de la membrure inférieure sont reliées l'une à l'autre par des traverses auxiliaires (11) et forment une plate-forme (12) sur laquelle est monté au moins un moteur à combustion interne (13) et qui forme un ensemble pouvant être prémonté qui peut être introduit dans le cadre support (1) et peut être fixé au moins sur la partie avant (8) de la membrure inférieure ainsi que sur la partie arrière (9) de la membrure inférieure.

2. Cadre support selon la revendication 1, **caractérisé en ce que** le moteur à combustion interne (13) est monté sur le dessus de la plate-forme (12), de sorte que le moteur à combustion interne (13), lorsque la plate-forme (12) est introduite dans le cadre support (1) et fixée sur celui-ci, soit disposé verticalement entre les membrures supérieures (5) et les membrures inférieures (6).

3. Cadre support selon la revendication 2, **caractérisé en ce que** le moteur à combustion interne (13) est conçu comme un moteur à cylindres opposés et horizontaux ou comme un moteur horizontal en ligne.

4. Cadre support selon l'une quelconque des revendications 1 à 3, **caractérisé en ce que** les parties centrales (10) de la membrure inférieure, lorsque la plate-forme (12) est montée dans le cadre support (1), sont reliées respectivement à la membrure supérieure associée (5), par au moins un isthme vertical (7).

5. Cadre support selon l'une quelconque des revendications 1 à 4, **caractérisé en ce qu'**un isthme vertical (7) est disposé sur une extrémité (19) de la partie avant (8), tournée vers la partie centrale (10), isthme par lequel la partie centrale (10) et la partie avant (8), lorsque la plate-forme (12) est montée dans le cadre support (1), sont reliées à la membrure supérieure associée (5).

6. Cadre support selon l'une quelconque des revendications 1 à 5, **caractérisé en ce qu'**un isthme vertical (7) est disposé sur une extrémité de la partie arrière (9), tournée vers la partie centrale (10), isthme par lequel la partie centrale (10) et la partie arrière (9), lorsque la plate-forme (12) est montée dans le cadre support (1), sont reliées à la membrure supérieure associée (5).

7. Cadre support selon l'une quelconque des revendications 1 à 6, **caractérisé en ce qu'**un isthme vertical (7) est disposé sur la partie centrale (10), entre ses extrémités (20, 22), isthme par lequel la partie centrale (10), lorsque la plate-forme (12) est montée dans le cadre support (1), est reliée à la membrure supérieure associée (5).

8. Cadre support selon l'une quelconque des revendications 1 à 7, **caractérisé en ce que** l'une des traverses (4) est disposée sur une extrémité (19) des parties avant (8), tournée vers la partie centrale (10), laquelle traverse relie l'une à l'autre les deux parties avant (8) de la membrure inférieure.

9. Cadre support selon l'une quelconque des revendications 1 à 8, **caractérisé en ce que** l'une des traverses (4) est disposée sur une extrémité (21) des parties arrière (9), tournée vers la partie centrale (10), laquelle traverse relie l'une à l'autre les deux parties arrière (9) de la membrure inférieure.

10. Cadre support selon l'une quelconque des revendications 1 à 9, **caractérisé en ce que** le moteur à combustion interne (13) est fixé sur la plate-forme (12) par des supports de moteur (23) qui sont configurés sur les traverses auxiliaires (11).

11. Cadre support selon l'une quelconque des revendications 1 à 10, **caractérisé en ce que** la plate-forme (12) est fixée sur le cadre support (1) par des moyens de fixation démontables.

12. Cadre support selon l'une quelconque des revendications 1 à 11, **caractérisé en ce que**, en plus du moteur à combustion interne (13), une transmission (14) ou une transmission équipée d'un ralentisseur ou un ensemble transmission / ralentisseur est monté(e) également sur la plate-forme (12).
